# EUROPÄISCHE PATENTANMELDUNG

(11) **EP 1 304 893 A1**
(43) Veröffentlichungstag der Anmeldung: **23.04.2003**
(21) Anmeldenummer: 01440355.4
(22) Anmeldetag: 22.10.2001
(51) Int. Cl.: H04Q 7/28

(54) **Verfahren zum Betrieb eines Mobilfunkendgerätes, Mobilfunksystem, Funkfeststation, Rechner und Mobilfunkendgerät dafür**

(71) Anmelder: ALCATEL, 75008 Paris (FR)
(72) Erfinder: Tangemann, Michael Dr., 71229 Leonberg (DE); Nikolai, Dirk Dr., 70439 Stuttgart (DE)
(74) Vertreter: Brose, Gerhard, Dipl.-Ing.

(57) **Zusammenfassung**

Es sind Mobilfunkendgeräte bekannt, die in zwei oder mehreren verschiedenen Betriebsmodi betrieben werden können. Diese werden üblicherweise als "dual-mode terminals" beziehungsweise "multi-mode terminals" bezeichnet. Dazu enthalten diese Mobilfunkendgeräte entsprechend ausgeführte Funkschnittstellen, wie zum Beispiel eine UMTSund eine HIPERLAN-Funkschnittstelle.

Damit die Mobilfunkendgeräte möglichst oft im gebührenfreien HIPERLAN-Betriebsmodus (COMB) direkt miteinander kommunizieren können, wird vorgeschlagen, dass die Positionen der von der jeweiligen Funkfeststation versorgten und sich in dem UMTS-Betriebsmodus (COMA) befindlichen Mobilfunkendgeräte bestimmt werden und dass denjenigen Mobilfunkendgeräten, die sich in einer Entfernung zueinander befinden, die geringer als eine vorgebbare Distanz ist, ein Wechsel in den HIPERLAN-Betriebsmodus (COMB) erlaubt wird. Vorteilhafterweise wird das Verfahren im Rahmen einer Positionsbestimmung durchgeführt, die der Bereitstellung und Durchführung von positionsabhängigen Mobilfunkdiensten (Englisch: "location based services) dient.

## Beschreibung

Die Erfindung betrifft ein Verfahren zum Betrieb von Mobilfunkendgeräten, gemäß dem Oberbegriff des Anspruchs 1. Außerdem betrifft die Erfindung ein zur Ausführung dieses Verfahrens geeignetes Mobilfunksystem und dafür vorgesehene Vorrichtungen, wie eine Funkfeststation, einen Rechner und ein Mobilfunkendgerät gemäß den Oberbegriffen der nebengeordneten Ansprüche.

Es sind Mobilfunkendgeräte bekannt, die in zwei oder mehreren verschiedenen Betriebsmodi betrieben werden können. Diese werden üblicherweise als "dual-mode terminals" beziehungsweise "multi-mode terminals" bezeichnet. Solche Mobilfunkendgeräte enthalten eine erste Funkschnittstelle zur Kommunikation in einem Mobilfunksystem, insbesondere in einem öffentlichen Mobilfunksystem wie etwa dem GSM (global system for mobile communications). Dabei werden Funkverbindungen zu den Funkfeststationen des Mobilfunksystems aufgebaut und können über größere Distanzen gehen (bis zu 35 km bei GSM). Außerdem können diese Mobilfunkendgeräte mindestens noch eine weitere Funkschnittstelle enthalten zur Kommunikation in einem anderen Mobilfunksystem, insbesondere in einem privaten Mobilfunksystem, wie etwa dem DECT-System (digital european cordless telephone). Solche Mobilfunkendgeräte sind also in der Lage, in verschiedenen Mobilfunksystemen unter Anwendung der dazu benötigten verschiedenen Funkübertragungstechniken zu kommunizieren. In diesem Zusammenhang sind auch Mobilfunkendgeräte zu nennen, die über eine direkte Funkverbindung mit gleichartigen Mobilfunkendgeräten kommunizieren können. Dazu enthalten diese Mobilfunkendgeräte eine entsprechend ausgeführte Funkschnittstelle, wie zum Beispiel eine sogenannte Bluetooth- oder Hiperlan-Schnittstelle. Die direkte Funkkommunikation ist jedoch nur in einem begrenzten Entfernungsbereich möglich, der in der Regel auf wenige Meter, zumeist auf Sichtweite, beschränkt ist. Demnach gibt es also bereits Mobilfunkendgeräte, die sowohl über eine erste Funkschnittstelle zur Funkkommunikation über Funkfeststationen eines Mobilfunksystems verfügen, als auch über eine zweite Funkschnittstelle verfügen, zur Kommunikation über einer Funkverbindung mit gleichartigen Mobilfunkendgeräten. Diese Mobilfunkendgeräte können demnach in dem einen Betriebsmodus über größere Entfernungen miteinander kommunizieren, wobei sie die Infrastruktur, insbesondere die Funkfeststationen, des Mobilfunksystems nutzen. Sofern sich die Mobilfunkgeräte in unmittelbarer Nähe zueinander befinden, können sie jedoch in dem anderen Betriebsmodus direkt miteinander kommunizieren. Es wäre wünschenswert, dass die Mobilfunkgeräte möglichst oft in direkter Funkverbindung miteinander kommunizieren, um die zumeist kostenpflichtige Nutzung des Mobilfunksystems zu vermeiden.

Aufgabe der Erfindung ist es daher, ein Verfahren zum Betrieb von Mobilfunkendgeräten der eingangs genannten Art vorzuschlagen, so dass ein optimaler Wechsel zwischen den Betriebsmodi erfolgen kann.

Außerdem sollen ein Mobilfunksystem, zur Durchführung des Verfahrens vorgeschlagen werden, sowie eine Funkfeststation, ein Rechner und ein Mobilfunkendgerät dafür.

Gelöst wird die Aufgabe durch ein Verfahren mit den Merkmalen des Patentanspruchs 1 sowie durch die gemäß den nebengeordneten Patentansprüchen definierten Vorrichtungen.

Demnach wird vorgeschlagen, dass die Positionen der von der jeweiligen Funkfeststation versorgten und sich in dem ersten Betriebsmodus (indirekte Funkverbindung) befindlichen Mobilfunkendgeräte bestimmt werden und dass denjenigen Mobilfunkendgeräten, die sich in einer Entfernung zueinander befinden, die geringer als eine vorgebbare Distanz ist, ein Wechsel in den zweiten Betriebsmodus (direkte Funkverbindung) erlaubt wird.

Das Verfahren zum Betrieb von Mobilfunkendgeräten wird also deutlich verbessert, indem als Entscheidungskriterium zur Auswahl des optimalen Betriebsmodus die Positionen der Mobilfunkendgeräte herangezogen werden, wobei die relative Positionsbestimmung der Mobilfunkendgeräte zueinander mittels der Infrastruktur des Mobilfunksystems bestimmt wird. Das heißt, dass von dem Mobilfunksystem, das zunächst die Mobilfunkendgeräte versorgt, erkannt wird, ob die Mobilfunkendgeräte sich in einer geringen Entfernung voneinander befinden. In diesem Falle wird dann ein Wechsel in den zweiten Betriebsmodus, bei dem eine direkte Funkverbindung zwischen den Mobilfunkendgeräten aufgebaut wird, erlaubt.

Besonders vorteilhafte Ausführungsformen ergeben sich aus den abhängigen Patentansprüchen.

Demnach wird das Verfahren vorteilhafterweise im Rahmen einer Positionsbestimmung durchgeführt, die der Bereitstellung und Durchführung von positionsabhängigen Mobilfunkdiensten (Englisch: "location based services) dient. Dadurch kann auf die vorhandenen Vorrichtungen zur Positionsbestimmung zurückgegriffen werden.

Es ist auch vorteilhaft, wenn die Positionsbestimmungen mittels der Funkfeststationen selbst durchgeführt werden, falls diese räumlich ausgerichtete Empfangsantennen, insbesondere Sektorantennen oder Gruppenantennen haben. In diesem Falle bestimmt die jeweilige Funkfeststation die Empfangsrichtung der von ihr empfangenen Funksignale und führt anschließend Messungen dieser Funksignale durch, insbesondere Messungen der Funksignallaufzeiten oder Messungen der Funksignaldämpfung. Aus der ermittelten Empfangsrichtung und den gemessenen Funksignallaufzeiten beziehungsweise Funksignalsdämpfungen, kann die Position des jeweiligen Mobilfunkendgerätes einfach und direkt vor Ort an der Funkfeststation bestimmt werden.

Außerdem ist es vorteilhaft, wenn die Positionsbestimmungen mittels mindestens zweier benachbarter Funkfeststationen erfolgt, wobei ein mit den Funkfeststationen verbundener Rechner die Positionsbestimmung an Hand eines an sich bekannten Positionsbestimmungs-Verfahrens, insbesondere Triangulations-Verfahrens, durchführt, indem der Rechner die gemessenen Funksignallaufzeiten und/oder Funksignaldämpfungen dazu heranzieht. Durch diese Maßnahmen wird also ein zentral in dem Rechner durchgeführtes Positionierungsverfahren ermöglicht.

Es ist auch besonders vorteilhaft, wenn der erste und zweite Betriebsmodus jeweils eine Steuerungsebene und eine Nutzerebene umfassen, wobei die Steuerungsebene zur Übertragung von Signalisierungsdaten und die Nutzerebene zur Übertragung von Nutzdaten verwendet werden, und wenn denjenigen Mobilfunkendgeräten, die sich in einer Entfernung zueinander befinden, die geringer als eine vorgebbare Distanz ist, nur ein Wechsel auf der Nutzerebene in den zweiten Betriebsmodus erlaubt wird, wobei die Mobilfunkendgeräte aber auf der Steuerungsebene in dem ersten Betriebsmodus verbleiben. Damit wird eine logische Unterscheidung zwischen Steuerungsebene (control plane) und Nutzerebene (user plane) getroffen, und zwar derart, das nur die Nutzdatenverbindung wechselt von der zunächst zwischen den Mobilfunkendgeräten bestehenden indirekten Funkverbindung (z.B. GSM user plane), die über die Infrastruktur des Mobilfunksystems, insbesondere über die mindest eine Funkfeststation verläuft, zu der direkten Funkverbindung (z.B. Bluetooth user plane), die unmittelbar zwischen den Mobilfunkendgeräten aufgebaut wird. Dabei verbleibt die Übertragung der Steuersignale, d.h. die auf der Steuerebene (control plane) durchgeführte Signalisierung auf der anfangs eingerichteten indirekten Funkverbindung bestehen. Mit anderen Worten: Die Nutzdatenübertragung wechselt in den direkten Modus, die Signalisierung verbleibt jedoch im indirekten Modus. Durch diese Maßnahmen wird erreicht, dass Steuerung und Kontrolle weiterhin zentral von dem Mobilfunksystem ausgeführt werden, so dass etwa auch die Teilnehmerverwaltung und die Vergebührung dort fortgesetzt werden kann, dass aber durch den Wechsel auf der Nutzerebene die Funkressourcen des Mobilfunknetzes entlastet werden. Daher könnte auch bei einem Wechsel in den direkten Modus die Vergebührung mit einer niedrigeren Gebührenrate ausgeführt werden. Da alle Steuerungsfunktionen einschließlich die Teilnehmerverwaltung von dem Mobilfunksystem zentral ausgeführt werden, kann auch jederzeit ein Wechsel zurück in den indirekten Modus veranlasst werden.

Weitere Vorteile ergeben sich dadurch, dass der Wechsel von dem einen Betriebsmodus zu dem anderen nicht nur erlaubt wird, sondern vorzugsweise sogar von der Funkfeststation aktiv angewiesen wird. Aufgrund der Anweisungen werden dann die Mobilfunkendgeräte ihre Funkverbindungen mit der Funkfeststation abbauen und untereinander direkte Funkverbindungen aufbauen. Dadurch erfolgt ein vom Mobilfunksystem gesteuerter, automatischer Wechsel des Betriebsmodus.

Die Erfindung und die sich daraus ergebenden Vorteile werden im weiteren näher beschrieben an Hand von mehreren Ausführungsbeispielen, wobei auf folgende schematische Zeichnungen Bezug genommen wird:
- Figur 1,: die eine erfindungsgemäße Funkfeststation zeigt (erstes Beispiel);
- Figur 2,: die das Ablaufdiagramm eines in der Funkfeststation durchgeführten Verfahrens zeigt (erstes Beispiel);
- Figur 3a,: die ein erfindungsgemäßes Mobilfunksystem mit einem Rechner und mit mehreren daran angeschlossene Funkfeststationen zeigt (zweites Beispiel);
- Figur 3b,: die die Systemarchitektur des Mobilfunksystems schematisch wiedergibt (zweites Beispiel);
- Figur 4,: die den Aufbau eines erfindungsgemäßen Mobilfunkendgerätes zeigt (für erstes und zweites Beispiel); und
- Figur 5,: die die den Aufbau eines modifizierten Mobilfunkendgerätes zeigt (drittes Beispiel).

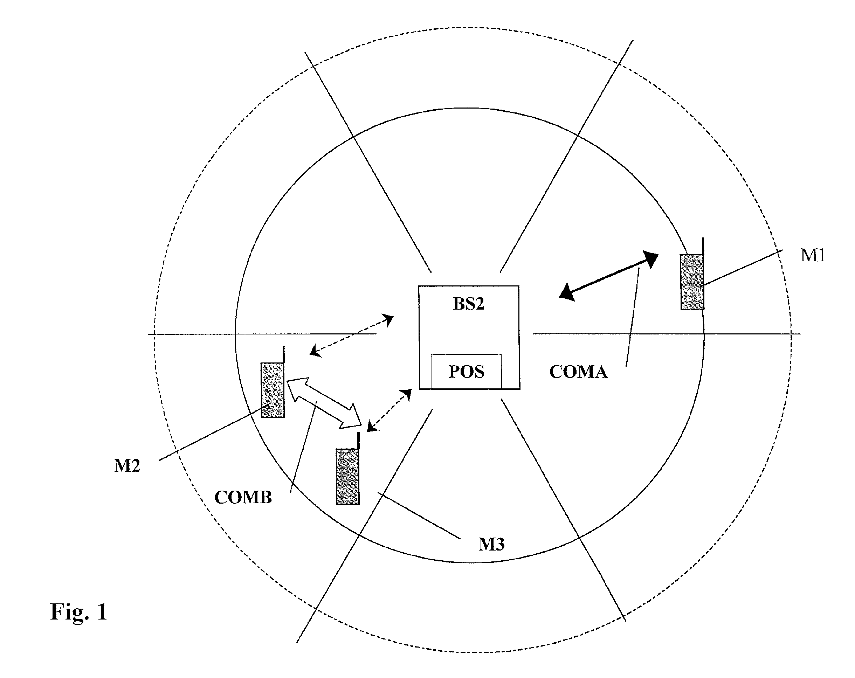

In der Figur 1 ist als erstes Ausführungsbeispiel der Fall gezeigt, bei dem eine Funkfeststation BS2 das erfindungsgemäße Verfahren durchführt. Dazu hat die Funkfeststation BS2 räumlich ausgerichtete Empfangsantennen, hier sechs Sektorantennen, die jeweils einen Öffnungswinkel von 60 Grad haben, und eine Vorrichtung zur Positionsbestimmung POS. In dem Versorgungsbereich (Funkzelle) der Funkfeststation BS2 halten sich beispielsweise drei Mobilfunkendgeräte M1, M2 und M3 auf. Das Mobilfunkendgerät M1 befindet sich in einem ersten Betriebsmodus COMA, bei dem es in Funkverbindung mit der Funkfeststation BS2 steht. Von dort aus geht die Verbindung weiter über nicht dargestellte Infrastruktur-Elemente des Mobilfunksystems zu dem anderen (nicht dargestellten) Mobilfunkendgerät des Gesprächsteilnehmers oder über ein (nicht dargestelltes) Telekommunikationsfestnetz zu einem dort angeschlossenen Gesprächsteilnehmer.

Die Mobilfunkendgeräte M2 und M3 befinden sich in derselben Funkzelle und kommunizieren untereinander, wobei sie zunächst ebenfalls den ersten Betriebsmodus benutzen, das heißt jeweils die Funkverbindung mit der Funkfeststation BS2 benutzen (angedeutet durch gestrichelte Pfeile). Sofern sich diese beiden Mobilfunkendgeräte M2 und M3 in unmittelbarere Nähe zueinander befinden, ist auch eine Kommunikation über eine direkte Funkverbindung gemäß eines zweiten Betriebsmodus COMB möglich. In diesem Falle würde keine Nutzung der Infrastruktur des Mobilfunksystems mehr benötigt. Auch könnten dann die dafür anfallenden Gebühren gespart werden.

Um nun festzustellen, ob sich die beiden Mobilfunkendgeräte M2 und M3 in unmittelbarere Nähe zueinander befinden und ob ein Wechsel in den zweiten Betriebsmodus COMB möglich und sinnvoll ist, ermittelt die Funkfeststation MS2 die Positionen der Mobilfunkendgeräte und erlaubt eine Wechsel in den zweiten COMB, wenn sich zumindest zwei Mobilfunkendgeräte, hier M2 und M3, sich in einer Entfernung zueinander befinden, die geringer ist als eine vorgebbare Distanz. In einzelnen erfolgt in diesem Beispiel die Positionsbestimmung der Mobilfunkendgeräte wie folgt:

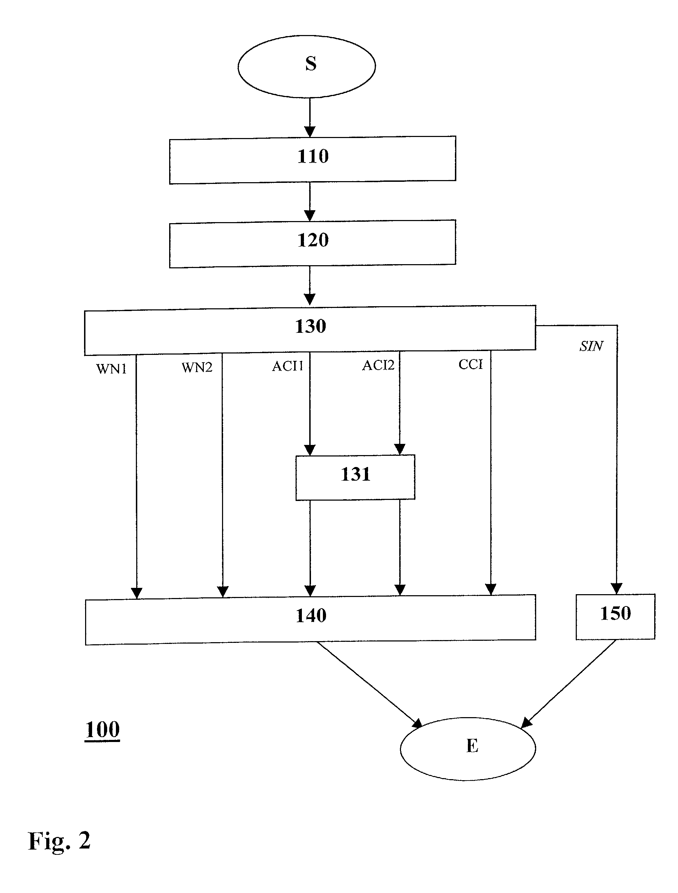

Die in der Funkfeststation BS2 integrierte Vorrichtung POS prüft für jeden Antennensektor, ob sich darin mindestens zwei miteinander in dem ersten Betriebsmodus COMA, also indirekt miteinander, kommunizierende Mobilfunkendgeräte aufhalten. Wenn dies der Fall ist, prüft die Vorrichtung POS weiterhin, ob diese beiden Mobilfunkendgeräte (hier M2 und M3) sich in unmittelbarer Nähe zueinander befinden, so dass eine direkte Kommunikation im zweiten Betriebsmodus COMB möglich ist. Zur Verdeutlichung dieses Verfahrens wird im weiteren nicht nur auf die Figur 1 sondern auch auf die Figur 2 verwiesen:

Nach dem Start des Verfahrens (siehe Schritt S) wird in einem ersten Schritt 101 zunächst einer der verschiedenen Sektoren ausgewählt und festgestellt, welche der dort befindlichen Mobilendgeräte miteinander in dem ersten Betriebsmodus COMA, das heißt über die Funkfeststation BS2, miteinander kommunizieren. Im Beispiel nach der Figur 1 sind dies die Mobilfunkendgeräte M2 und M3, die zunächst nur indirekt miteinander verbunden sind (siehe gestrichelte Pfeile). Danach wird in einem nächsten Schritt 102 festgestellt, in welchem Abstand zur Funkfeststation BS2 sich diese Mobilfunkendgeräte M2 und M3 befinden. Dazu werden Funksignalmessungen durchgeführt, in diesem Beispiel werden die Signallaufzeiten der Empfangssignale gemessen, die wiederum ein Maß sind für die radiale Entfernung der Mobilfunkendgeräte zu der Funkfeststation BS2.

In einem nachfolgenden Schritt 110 werden die gemessenen Laufzeiten mit einem Schwellwert verglichen, der einer maximal vorgebbaren Distanz (Referenzwert) entspricht. In diesem Beispiel wird geprüft, ob die gemessenen Laufzeiten kleiner sind als 1 Mikrosekunde, was einer Distanz von etwa 300 Metern entspricht, die inneren Bereich des Sektors abgrenzt (siehe durchgezogene Kreislinie in der Figur 1).

Ist die jeweils gemessene Laufzeit und damit auch die entsprechende Entfernung jedoch größer als die der vorgegebene Referenzwert, so befindet sich das Mobilfunkendgerät nicht im inneren, sondern im äußeren Bereich des Sektors (angedeutet durch die gestrichelte Kreislinie in Figur 1). In diesem äußeren Bereich jedoch kann nicht ausgeschlossen werden, dass die Entfernung zwischen zwei Mobilfunkendgeräten zu groß ist, um eine direkte Funkverbindung aufzubauen. Nur in dem inneren Bereich des Sektors (durchgezogene Kreislinie) ist stets sichergestellt, dass sich die dort aufhaltende Mobilfunkendgeräte, wie beispielsweise M2 und M3, immer in einer unmittelbaren Nähe zueinander befinden, so dass eine direkte Funkverbindung im Rahmen des zweiten Betriebsmodus COMB aufgebaut werden kann. Im Bezug auf das in Figur 2 dargestellte Ablaufdiagramm des Verfahrens bedeutet dies:

Ist die im Schritt 110 gemessene Laufzeit zu groß, und befindet sich danach das Mobilfunkendgerät im äußeren Teil des Sektors, so wird ein Schritt 120 eingeleitet, der einen Wechsel von dem ersten Betriebsmodus COMA in den zweiten Betriebsmodus COMB verhindert. Das Mobilfunkendgerät verbleibt demnach in Funkverbindung mit der Basisstation BS2. Sind jedoch die gemessenen Laufzeiten gering genug, das heißt befinden sich beide Mobilfunkgeräte innerhalb des inneren Bereiches des Sektors, so wird ein nächster Schritt 121 ausgeführt. In diesem Schritt werden beide Mobilfunkendgeräte angewiesen, von dem ersten Betriebsmodus COMA in den zweiten Betriebsmodus COMB zu wechseln und somit eine direkte Funkverbindung zueinander aufzubauen. Danach folgt Schritt 122, bei dem der Wechsel in den zweiten Betriebsmodus COMB durchgeführt und der Aufbau der direkten Funkverbindung erfolgt. Das Verfahren endet in jedem Fall mit dem Schritt E.

An Hand der Figuren 1 und 2 wurde ein erstes Ausführungsbeispiel beschrieben, bei dem in jeder Funkzelle die dortige Funkfeststation selbst die Positionen der Mobilfunkendgeräte bestimmt und einen Wechsel in den zweiten Betriebsmodus COMB, das heißt einen Wechsel zu einer direkten Funkverbindung, erlaubt und vorzugsweise diesen Wechsel sogar anweist.

Die an Hand der Figur 1 beschriebene Funkfeststation BS2 verfügt über Sektorantennen, mit denen sie auf sehr einfache Art und Weise die Empfangsrichtung der von ihr empfangenen Funksignale bestimmen kann. Es ist auch denkbar, dass Gruppenantennen, sogenannte "smart antennas", eingesetzt werden, die eine genauere Bestimmung der Empfangsrichtung erlauben. Außerdem ermittelt die an Hand der Figur 1 beschriebene Funkfeststation BS2 durch Messungen von Funksignallaufzeiten die jeweilige Entfernung zu dem einzelnen Mobilfunkendgerät. Alternativ können auch Funksignaldämpfungen oder ähnliche Parameter gemessen werden.

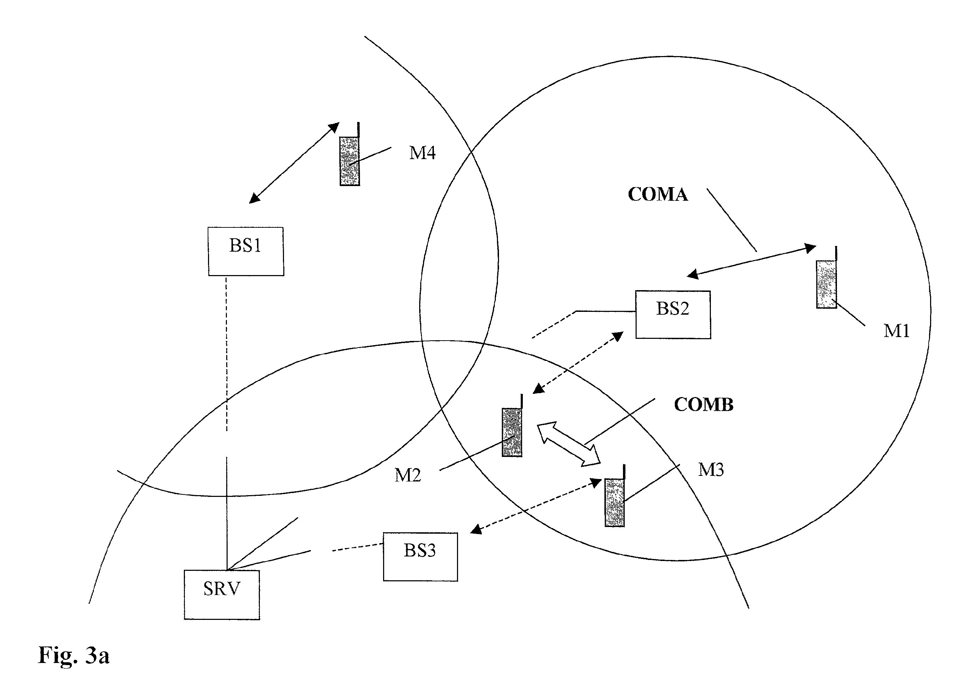

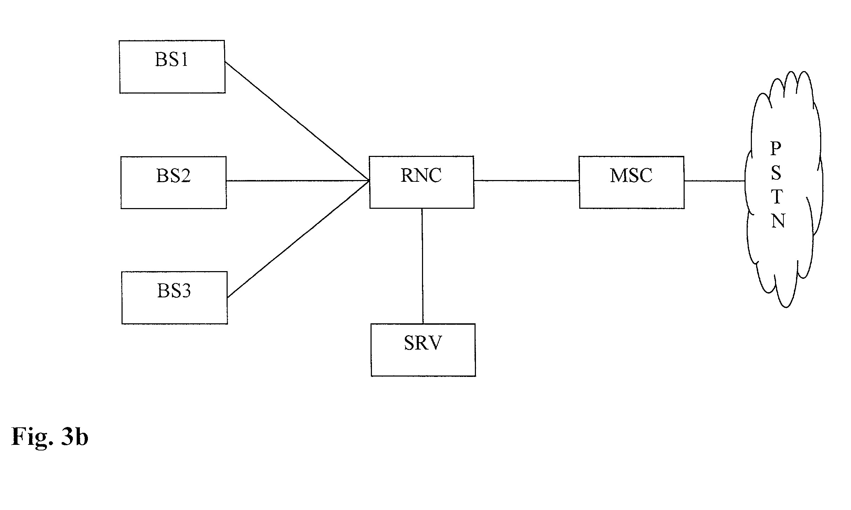

Es folgt nun die Beschreibung eines zweiten Ausführungsbeispieles an Hand der Figuren 3a und 3b:

Die Figur 3a zeigt ein Mobilfunksystem, das nach dem UMTS-Standard (Universal Mobile Telecommunications System) arbeitet und mehrere Funkfeststationen hat, von denen hier beispielhaft die drei Funkfeststationen BS1, BS2, und BS3 dargestellt sind. Jede Funkfeststation, im weiteren auch kurz Basisstation genannt, versorgt eine Funkzelle. In diesen Versorgungsbereichen (Funkzellen) befinden sich Mobilfunkendgeräte M1 bis M4, die sowohl in einem ersten Betriebsmodus COMA als auch in einem zweiten Betriebsmodus COMB kommunizieren können. Bei dem ersten Betriebsmodus COMA erfolgt die Kommunikation über die Funkfeststationen und die Infrastruktur des Mobilfunksystems. Dazu verfügen die Mobilfunkendgeräte über entsprechende UMTS-Funkschnittstellen.

Es kann auch gemäß des zweiten Betriebsmodus COMB eine direkte Funkverbindung zwischen zwei sich in unmittelbarer Nähe zueinander befindenden Mobilfunkendgeräten aufgebaut werden. Die Mobilfunkendgeräte verfügen dazu jeweils über eine weitere Funkschnittstelle, hier über eine HIPERLAN-Funkschnittstelle.

Die Entscheidung, in welchem Betriebsmodus ein jedes Mobilfunkendgerät betrieben wird, wird auch hier durch das Mobilfunksystem getroffen, wobei hier eine Positionsbestimmung der Mobilfunkendgeräte durchgeführt wird durch einen mit dem Funkfeststationen verbundenen Rechner SRV, der hier auch als Diensterechner (Server) zur Bereitstellung von positionsabhängigen Mobilfunkdiensten genutzt wird.

Wie in der Figur 3a zu sehen ist, befinden sich die Mobilfunkendgeräte M1 und M4 in dem ersten Betriebsmodus COMA und kommunizieren miteinander über die entsprechenden Funkfeststationen BS2 beziehungsweise BS1 und die (nicht näher dargestellte) Infrastruktur des Mobilfunksystems. Auch die Mobilfunkendgeräte M2 und M3 befinden sich zunächst in dem ersten Betriebsmodus (siehe gestrichelte Doppelpfeile) und kommunizieren miteinander über die Infrastruktur des Mobilfunksystems, das heißt über ihre UMTS-Funkschnittstellen.

Die Mobilfunkendgeräte M2 und M3 könnten aber zu dem zweiten Betriebsmodus COMB, das heißt zur direkten Kommunikation über ihre HIPERLAN-Funkschnittstellen, wechseln, da sie sich in unmittelbarere Nähe zueinander befinden. Diese direkte Kommunikation wäre gebührenfrei und würde das Mobilfunknetz entlasten. Zum Wechsel in den direkten Betriebsmodus COMB ermittelt nun der Rechner SRV die Aufenthaltsorte der Mobilfunkgeräten wie folgt:

Die Basisstationen empfangen von den Mobilstationen nicht nur Nutzdaten für Sprach- und Bildübertragung und dergleichen mehr, sondern auch Signalisierungsdaten, wie etwa Messdaten im Rahmen von Messberichten, sogenannten "measurement reports", für das Verwalten der Funkressourcen und Steuern der Sendeleistungseinstellung usw..

Dabei empfangen die Basisstationen diese Messberichte nicht nur von denjenigen Mobilfunkendgeräten, mit denen sie in Kommunikation sind, also eine Nutzdatenverbindung haben, sondern auch von den anderen Mobilfunkendgeräten, die sich in benachbarten und angrenzenden Funkzellen aufhalten und Funksignale mit Messberichten senden. Beispielsweise empfangen die Basisstationen BS2 und BS3 gleichermaßen solche Funksignale von den Mobilfunkendgeräten M2 und M3. Somit kann also festgestellt werden, dass sich die Mobilfunkendgeräte im Überlappungsbereich der beiden Funkzellen aufhalten. Die jeweiligen Positionen der Mobilfunkendgeräte M2 und M3 werden an Hand eines an sich bekannten Positionierungsverfahrens, hier an Hand eines Triangulations-Verfahrens, ermittelt. Dabei beschreiben die gemessenen Funksignallaufzeiten Radien, deren Schnittpunkte die wahrscheinlichen Aufenthaltsorte der gesuchten Mobilfunkendgeräte angeben.

Somit kann festgestellt werden, ob Mobilfunkendgeräte, wie beispielsweise M2 und M3, sich in dem selben Bereich des Mobilfunksystems aufhalten. Ist dies der Fall, so werden von den für die Kommunikation zuständigen Funkfeststationen (hier BS2 für M2 und BS3 für M3) Signale gesendet, die diesen Mobilfunkendgeräten anzeigen, dass sie von dem ersten Betriebsmodus in den zweiten Betriebsmodus COMB wechseln können. In diesem Beispiel nach der Figur 3a, können dann die Mobilfunkendgeräte M2 und M3 eine direkte Funkverbindung zueinander aufbauen. Die Entscheidung liegt bei den Benutzern (Mobilfunkteilnehmern). Es ist auch denkbar, dass die Mobilfunkgeräte angewiesen werden, den Wechsel durchzuführen.

Die Figur 3b zeigt schematisch den prinzipiellen Aufbau des Mobilfunksystems nach Figur 3a. Demnach sind die verschiedenen Funkfeststationen BS1 bis BS3 an eine Funknetzsteuerung RNC angeschlossen, die unter anderem den Funkverbindungsauf- und -abbau sowie die Verwaltung der Funkressourcen steuert. An die Funknetzsteuerung RNC wiederum ist eine Funkvermittlungsstelle MSC angeschlossen, die die Verbindung zu anderen Telekommunikationsnetzen, hier beispielsweise zu einem öffentlichen Telekommunikationsnetz PSTN herstellt. An die Funknetzsteuerung RNC ist auch der Rechner SRV angeschlossen, der im wesentlichen für die Positionsbestimmung der sich im Mobilfunksystem aufhaltenden Mobilfunkendgeräte zuständig ist.

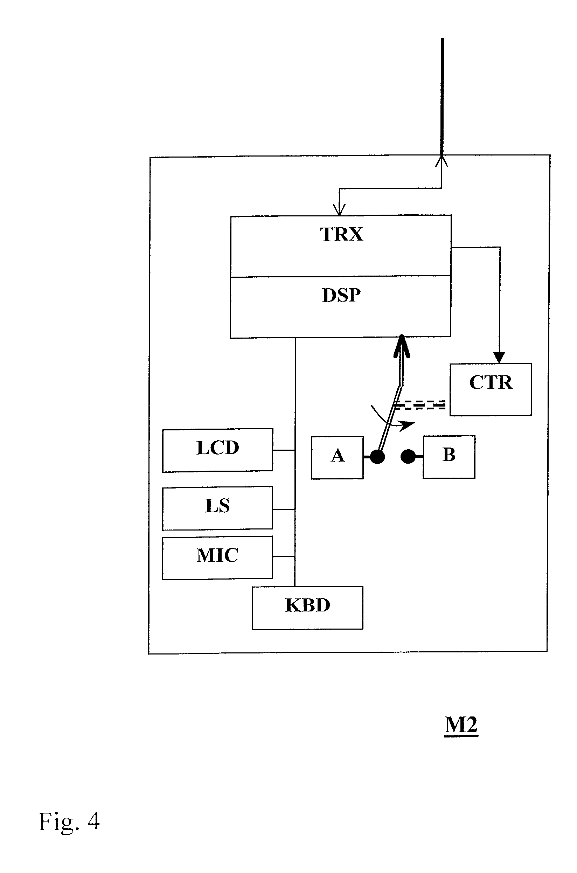

In der Figur 4 ist schematisch der Aufbau eines erfindungsgemäßen Mobilfunkendgeräts am Beispiel des Gerätes M2 dargestellt. Das Gerät enthält unter anderem einen mit der Antenne verbundenen Sendeempfänger TRX, der ein Analogteil (nicht dargestellt) und ein Digitalteil DSP enthält. Mit dem Digitalteil DSP sind unter anderem verbunden: eine Anzeige LCD, ein Lautsprecher LS, ein Mikrofon MIC und eine Tastatur KBD. Zum Betrieb des Mobilfunkendgeräts M2 arbeitet das Digitalteil DSP nach verschiedenen Betriebsmodi, die verschiedene Funkschnittstellen repräsentieren und durch die Bezugszeichen A beziehungsweise B dargestellt sind. Je nach aktuellem Betriebsmodus wird in dem Digitalteil DSP eine entsprechende Software geladen und ausgeführt. Zum Wechsel zwischen den Betriebsmodi ist eine Steuerung CTR vorgesehen, die mit dem Sendeempfänger TRX verbunden ist. Durch einen Empfang von Anweisungen aus dem Mobilfunksystem wird von dem Sendeempfänger TRX ein Steuersignal an die Steuerung CTR weitergeleitet, die wiederum einen Wechsel von dem ersten Betriebsmodus in den zweiten Betriebsmodus veranlasst, das heißt ein Umschalten von der Funkschnittstelle A (hier UMTS) zur Funkschnittstelle B (hier HIPERLAN).

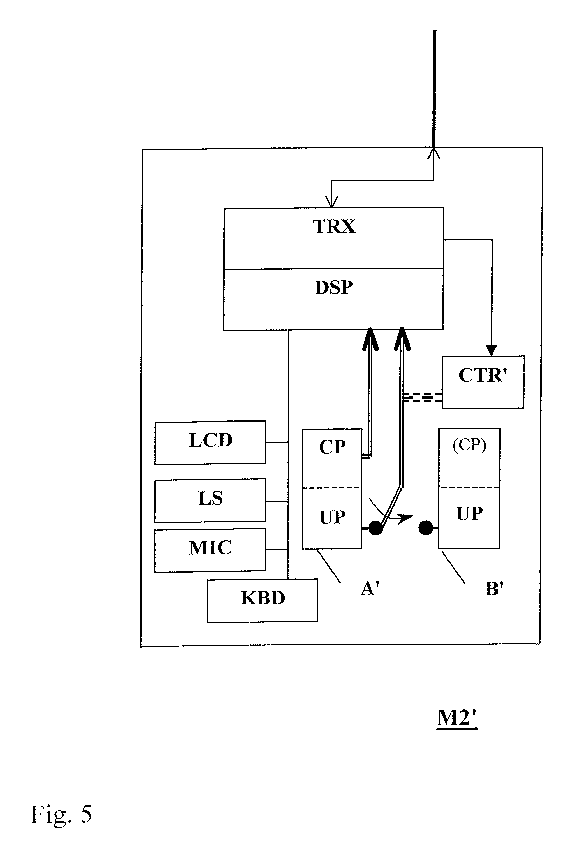

Die Figur 5 zeigt schematisch den Aufbau eines modifizierten Mobilfunkendgeräts M2'. Die meisten Komponenten dieses Geräts M2' sind gleich denen des zuvor beschriebenen Geräts. Demnach hat auch dieses Gerät M2' unter anderem einen mit der Antenne verbundenen Sendeempfänger TRX, der ein Analogteil (nicht dargestellt) und ein Digitalteil DSP enthält. Mit dem Digitalteil DSP sind unter anderem verbunden: eine Anzeige LCD, ein Lautsprecher LS, ein Mikrofon MIC und eine Tastatur KBD. Jedoch sind zum Betrieb dieses Mobilfunkendgeräts M2' eine Steuerungsmodul CTR' und zwei modifizierte Funkschnittstellen A' und B' vorgesehen, die jeweils in ihre Steuerungsebene CP (control plane) und Nutzerebene UP (user plane) unterteilt sind. Das hat den Zweck, dass auch die beiden Betriebsmodi entsprechend aufgeteilt sind in einen für die Steuerungsebene zuständigen Teil und in einen für die Nutzerebene zuständigen Teil, so dass beim Wechsel von dem einen (indirekten) Modus in den anderen (direkten) Modus lediglich auf die direkte Nutzdatenverbindung gewechselt wird. Die Signalisierungsverbindung zum Mobilfunksystem bleibt erhalten und es kann somit jederzeit wieder ein Wechsel zurück zur indirekten Nutzdatenverbindung erfolgen. Dadurch kann zeitweise und/oder bedarfsweise Nutzverkehrslast (traffic load) aus dem Mobilfunksystem ausgelagert und später wieder zurückgeführt werden. Vorzugsweise werden preiswertere Tarifstufen angeboten, wenn die Mobilfunkendgeräte direkt miteinander kommunizieren. Da die Signalisierungsverbindung zum Mobilfunksystem aktiv erhalten bleibt, können die Mobilfunkendgeräte jederzeit noch Signalisierungsinformationen mit dem Mobilfunksystem austauschen und speziell für die Steuerungsebene zugeschnittene Zusatzdienste, wie etwa Kurznachrichtendienste (short message services), Rundspruchdienste (cell broadcast), in Anspruch nehmen. Damit wird also eine logische Trennung zwischen dem Nutzdatenverkehr (user traffic) und dem Signalisierungsdatenverkehr (control traffic) vollzogen.

Die hier vorgeschlagene Aufteilung in Steuerungsebene (control plane) und Nutzerebenen (user plane) ist sehr flexibel. Es wird für jede Ebene eine entsprechende Software bereitgestellt (siehe in Fig. 5 die Bezugzeichen CP und UP), wobei für die zweite Funkschnittstelle B', die für die direkte Kommunikation verwendet wird, lediglich die Software für die Nutzerebene UP zu Verfügung stehen muss. Für die Steuerebene CP braucht die zweite Funkschnittstelle B' keine Software enthalten.

Die an Hand der verschiedenen Ausführungsbeispiele beschriebene Erfindung kann noch in vielen weiteren Varianten realisiert werden. Beispielsweise ist die Bestimmung der Positionen der Mobilfunkendgeräte auch möglich über satellitengestützte Navigationsverfahren, wie etwa dem GPS (global positioning system). Dazu verfügen die Mobilfunkendgeräte über einen entsprechenden GPS-Empfänger, der die genaue geografische Position ermittelt. Die Mobilfunkendgeräte teilen dann ihre Position dem Mobilfunksystem mit, welches auf der Grundlage der Positionsangaben bestimmt, welche der Mobilfunkendgeräte sich nahe genug zueinander befinden, um in den zweiten direkten Betriebsmodus zu wechseln. Es ist bei der Realisierung der Erfindung sowohl denkbar, dass der Wechsel von dem einen in den anderen Betriebsmodus manuell erfolgt, in dem der Nutzer des Mobilfunkendgeräts darüber bestimmt, oder dass der Wechsel automatisch erfolgt durch eine entsprechende Anweisung des Mobilfunksystems an die Mobilfunkendgeräte. Auch wäre es denkbar bei der Aufteilung der Betriebsmodi in Steuerungsebene und Nutzerebene so zu verfahren, dass lediglich auf der Steuerungsebene ein Wechsel in den direkten Modus erfolgt, wobei dieser Wechsel sich auf höhere Protokoll-Ebenen bezieht, auf denen ein Austausch von Signalisierungsdaten zwischen den Mobilfunkendgeräten (end-to-end) erfolgt.

## Patentansprüche

1. Verfahren (100) zum Betrieb von Mobilfunkendgeräten (M1 bis M4), die jeweils eine erste Funkschnittstelle (A) haben zur Funkkommunikation in einem ersten Betriebsmodus (COMA), bei dem die Mobilfunkendgeräte (M1 bis M4) in Funkverbindung mit Funkfeststationen (BS1 bis BS3) eines Mobilfunksystems stehen, und die jeweils eine zweite Funkschnittstelle (B) haben zur Funkkommunikation in einem zweiten Betriebsmodus (COMB), bei dem die Mobilfunkendgeräte (M1 bis M4) in direkter Funkverbindung zueinander stehen, **dadurch gekennzeichnet, dass**
die Positionen der von der jeweiligen Funkfeststation (BS2) versorgten und sich in dem ersten Betriebsmodus (COMA) befindlichen Mobilfunkendgeräte (M1, M2, M3) bestimmt werden (Schritte 101, 102) und dass denjenigen Mobilfunkendgeräten (M2, M3), die sich in einer Entfernung zueinander befinden, die geringer als eine vorgebbare Distanz ist, ein Wechsel in den zweiten Betriebsmodus (COMB) erlaubt wird (Schritt131).

2. Verfahren (100) nach Anspruch 1, **dadurch gekennzeichnet, dass**
die Positionsbestimmungen durchgeführt werden im Zusammenhang mit der Bereitstellung und Durchführung von positionsabhängigen Mobilfunkdiensten.

3. Verfahren (100) nach Anspruch 1, **dadurch gekennzeichnet, dass**
die Positionsbestimmungen mittels einer Funkfeststation (BS2) durchgeführt werden, die räumlich ausgerichtete Empfangsantennen, insbesondere Sektorantennen oder Gruppenantennen, hat, indem in der einen Funkfeststation (BS2) die Empfangsrichtung der von ihr empfangenen Funksignale bestimmt und Messungen dieser empfangenen Funksignale, insbesondere Messungen von Funksignallaufzeiten und/oder von Funksignaldämpfungen, durchgeführt werden (Schritt 112).

4. Verfahren nach Anspruch 1, **dadurch gekennzeichnet, dass**
die Positionsbestimmungen mittels mindestens zwei benachbarter Funkfeststation (BS1 bis BS3) und eines damit verbundenen Rechners (SRV) durchgeführt werden, indem in diesen Funkfeststationen (BS1 bis BS3) Messungen dieser empfangenen Funksignale, insbesondere Messungen von Funksignallaufzeiten und/oder von Funksignaldämpfungen, durchgeführt und von dem Rechner (SRV) mittels der gemessenen Werte ein Positionierungsverfahren, insbesondere ein Triangulationsverfahren, durchgeführt werden.

5. Verfahren (100) nach Anspruch 1, **dadurch gekennzeichnet, dass**
der Wechsel von dem ersten Betriebsmodus (COMA) in den zweiten Betriebsmodus (COMB) veranlasst wird durch die mindestens eine Funkfeststation (BS2), indem die Funkverbindungen mit den sich in dem ersten Betriebsmodus (COMA) befindlichen und sich in der geringen Entfernung zueinander befindlichen Mobilfunkendgeräte (M2, M3) abgebaut werden und indem diese Mobilfunkgeräte (M2, M3) angewiesen werden, die direkte Funkverbindung zueinander aufzubauen.

6. Verfahren nach Anspruch 1, **dadurch gekennzeichnet, dass** der erste und zweite Betriebsmodus jeweils eine Steuerungsebene und eine Nutzerebene umfassen, wobei die Steuerungsebene zur Übertragung von Signalisierungsdaten und die Nutzerebene zur Übertragung von Nutzdaten verwendet werden, und dass denjenigen Mobilfunkendgeräten, die sich in einer Entfernung zueinander befinden, die geringer als eine vorgebbare Distanz ist, nur ein Wechsel auf der Nutzerebene in den zweiten Betriebsmodus erlaubt wird, wobei die Mobilfunkendgeräte aber auf der Steuerungsebene in dem ersten Betriebsmodus verbleiben.

7. Mobilfunksystem mit Funkfeststationen (BS1 bis BS3) und mit Mobilfunkendgeräten (M1 bis M4), die jeweils eine erste Funkschnittstelle (A) haben zur Funkkommunikation in einem ersten Betriebsmodus (COMA), bei dem die Mobilfunkendgeräte (M1 bis M4) in Funkverbindung mit den Funkfeststationen (BS1 bis BS3) des Mobilfunknetzes stehen, und die jeweils eine zweite Funkschnittstelle (B) haben zur Funkkommunikation in einem zweiten Betriebsmodus (COMB), bei dem die Mobilfunkendgeräte (M1 bis M4) in direkter Funkverbindung zueinander stehen, **dadurch gekennzeichnet, dass**
das Mobilfunksystem mindestens eine Vorrichtung (POS) zur Bestimmung der Positionen der sich in dem ersten Betriebsmodus (COMA) befindlichen Mobilfunkendgeräte (M1, M2, M3) hat, und dass die mindestens eine Vorrichtung (POS) denjenigen Mobilfunkendgeräten (M2, M3), die sich in einer Entfernung zueinander befinden, die geringer als eine vorgebbare Distanz ist, ein Wechsel in den zweiten Betriebsmodus (COMB) erlaubt.

8. Mobilfunksystem nach Anspruch 7, **dadurch gekennzeichnet, dass** die Vorrichtungen (POS) zur Bestimmung der Positionen in die Funkfeststationen (BS2) integriert sind und dass jede der Funkfeststationen (BS2) räumlich ausgerichtete Empfangsantennen, insbesondere Sektorantennen oder Gruppenantennen, hat, mittels denen die jeweilige Funkfeststation (BS2) die Empfangsrichtung der von ihr empfangenen Funksignale bestimmt und Messungen dieser empfangenen Funksignale, insbesondere Messungen von Funksignallaufzeiten und/oder von Funksignaldämpfungen, durchführt.

9. Mobilfunksystem nach Anspruch 7, **dadurch gekennzeichnet, dass** die Vorrichtung zur Bestimmung der Positionen ein mit den Funkfeststationen (BS1 bis BS3) verbundener Rechner (SRV) ist, dass die Funkfeststationen (BS1 bis BS3) Messungen der von ihnen empfangenen Funksignale, insbesondere Messungen von Funksignallaufzeiten und/oder von Funksignaldämpfungen, durchführen, und dass der Rechner (SRV) mittels der gemessenen Werte ein Positionierungsverfahren, insbesondere ein Triangulationsverfahren, durchführt.

10. Funkfeststation (BS2) für ein Mobilfunksystem, das Mobilfunkendgeräte (M1 bis M3) enthält, die jeweils eine erste Funkschnittstelle (A) haben zur Funkkommunikation in einem ersten Betriebsmodus (COMA), bei dem die Mobilfunkendgeräte (M1 bis M3) in Funkverbindung mit der Funkfeststation (BS2) stehen, und die jeweils eine zweite Funkschnittstelle (B) haben zur Funkkommunikation in einem zweiten Betriebsmodus (COMB), bei dem die Mobilfunkendgeräte (M1 bis M3) in direkter Funkverbindung zueinander stehen, **dadurch gekennzeichnet, dass**
die Funkfeststation (BS2) eine Vorrichtung (POS) zur Bestimmung der Positionen der sich in dem ersten Betriebsmodus (COMA) befindlichen Mobilfunkendgeräte (M1, M2, M3) enthält, und dass die Funkfeststation (BS2) denjenigen Mobilfunkendgeräten (M2, M3), die sich in einer Entfernung zueinander befinden, die geringer als eine vorgebbare Distanz ist, ein Wechsel in den zweiten Betriebsmodus (COMB) erlaubt.

11. Rechner (SRV) für Mobilfunksystem mit Funkfeststationen (BS1 bis BS3) und mit Mobilfunkendgeräten (M1 bis M4), die jeweils eine erste Funkschnittstelle (A) haben zur Funkkommunikation in einem ersten Betriebsmodus (COMA), bei dem die Mobilfunkendgeräte (M1 bis M4) in Funkverbindung mit den Funkfeststationen (BS1 bis BS3) des Mobilfunknetzes stehen, und die jeweils eine zweite Funkschnittstelle (B) haben zur Funkkommunikation in einem zweiten Betriebsmodus (COMB), bei dem die Mobilfunkendgeräte (M1 bis M4) in direkter Funkverbindung zueinander stehen, **dadurch gekennzeichnet, dass**
der Rechner (SRV) mit den Funkfeststationen (BS1 bis BS3) des Mobilfunksystems verbunden ist und die Positionen der sich in dem ersten Betriebsmodus (COMA) befindlichen Mobilfunkendgeräte (M1 bis M4) bestimmt, und dass der Rechner (SRV) denjenigen Mobilfunkendgeräten (M2, M3), die sich in einer Entfernung zueinander befinden, die geringer als eine vorgebbare Distanz ist, ein Wechsel in den zweiten Betriebsmodus (COMB) erlaubt.

12. Mobilfunkendgerät (M2) mit einer ersten Funkschnittstelle (A) zur Funkkommunikation in einem ersten Betriebsmodus (COMA), bei dem das Mobilfunkendgerät (M2) in Funkverbindung mit einer Funkfeststation (BS2) eines Mobilfunknetzes steht, und mit einer zweiten Funkschnittstelle (B) zur Funkkommunikation in einem zweiten Betriebsmodus (COMB), bei dem das Mobilfunkendgerät (M2) in direkter Funkverbindung mit einem anderen Mobilfunkendgerät (M3) steht, **dadurch gekennzeichnet, dass**
das Mobilfunkendgerät (M2) eine Steuerung (CTR) zum Wechsel zwischen dem ersten Betriebsmodus (COMA) und dem zweiten Betriebsmodus (COMB) enthält und dass das Mobilfunkendgerät (M2) aufgrund einer Anweisung durch die Funkfeststation (BS2) von dem ersten Betriebsmodus (COMA) in den zweiten Betriebsmodus (COMB) wechselt durch Abbau der Funkverbindung mit der Funkfeststation (BS2) und durch Aufbau der direkten Funkverbindung mit dem anderen Mobilfunkendgerät (M4).

13. Mobilfunkendgerät (M2') nach Anspruch 12, **dadurch gekennzeichnet, dass** die erste und zweite Funkschnittstellen (A', B') sowie der erste und zweite Betriebsmodus jeweils eine Steuerungsebene (CP) und eine Nutzerebene (UP) umfassen, wobei das Mobilfunkendgerät (M2') auf der Steuerungsebene (CP) Signalisierungsdaten und auf der Nutzerebene (UP) Nutzdaten sendet und empfängt, dass die Steuerung (CTR') des Mobilfunkendgeräts (M2') den Wechsel zwischen dem ersten Betriebsmodus und dem zweiten Betriebsmodus aufgrund der Anweisung durch die Funkfeststation lediglich auf der Nutzerebene (UP) durchführt durch Abbau der Nutzdaten-Funkverbindung mit der Funkfeststation und durch Aufbau der direkten Nutzdaten-Funkverbindung mit dem anderen Mobilfunkendgerät, wobei die Steuerung (CTR') auf der Steuerungsebene (CP) die Signalisierungs-Funkverbindung zur Funkfeststation aufrecht erhält.
